# EUROPÄISCHE PATENTSCHRIFT

(11) **EP 3 994 970 B1**
(45) Veröffentlichungstag und Bekanntmachung des Hinweises auf die Patenterteilung: **15.05.2024**
(21) Anmeldenummer: 21205341.7
(22) Anmeldetag: 28.10.2021
(51) Int. Cl.: A01C 9/02

(54) **VORRICHTUNG ZUM VEREINZELN VON LEGEGUT**
DEVICE FOR SEPARATING PLANTING MATERIAL
DISPOSITIF DE SÉPARATION DU PRODUIT À PLANTER

(30) Priorität: 05.11.2020 DE 202020106359 U
(43) Veröffentlichungstag der Anmeldung: 11.05.2022
(73) Patentinhaber: Grimme Landmaschinenfabrik GmbH & Co. KG, 49401 Damme (DE)
(72) Erfinder: Wulferding, Henrik, 27248 Ehrenburg (DE)
(74) Vertreter: Wischmeyer, André

(56) Entgegenhaltungen:
- EP-B1- 2 215 903
- DE-A1- 2 214 134
- DE-A1- 2 936 413
- US-A1- 2006 283 363

## Beschreibung

Die Erfindung betrifft eine Vorrichtung zum Vereinzeln von Legegut wie z.B. Pflanzkartoffeln. Die Vorrichtung umfasst einen Bunker, der einen Vorhalteraum für das Legegut ausbildet. Außerdem umfasst die Vorrichtung zumindest eine Fördervorrichtung, die zum Ablegen einer Reihe des Legegutes ausgebildet ist. Die Fördervorrichtung umfasst zumindest ein Trägerelement, das im Betrieb in eine Umlaufrichtung und um eine Umlenkachse umläuft. Außerdem umfasst die Fördervorrichtung mehrere an dem Trägerelement angeordnete Förderelemente. Die Förderelemente verlaufen im Betrieb der Vorrichtung zur Aufnahme eines Legegutbestandteils jeweils in einer ersten Position relativ zum Trägerelement durch den Vorhalteraum. Daraufhin verlaufen die Förderelemente zur Abgabe des Legegutbestandteils durch einen Ausgabebereich.

Bekannt ist eine derartige Vorrichtung insbesondere als Kartoffellegemaschine. Dabei fördert bestimmungsgemäß jedes Förderelement pro Umlauf einen Legegutbestandteil aus dem Vorhalteraum bis zum Ausgabebereich. Die Förderelemente sind dabei in ihrer ersten Position insbesondere seitlich zu den benachbarten Förderelementen versetzt am Trägerelement angeordnet, um eine zuverlässige Legegutbestandteilaufnahme sicherzustellen. Die Fördervorrichtung ist dabei insofern zu einem Ablegen einer Reihe des Legegutes ausgebildet, als die Legegutbestandteile nach dem Verlassen des Ausgabebereichs auf den Erdboden fallen und nacheinander ausgegebene Legegutbestandteile daraufhin in eine Fortbewegungsrichtung der Vorrichtung voneinander beabstandet sind.

Bekannt ist eine Legemaschine mit einer Vorrichtung gemäß dem Oberbegriff des Anspruchs 1 aus der DE 2 214 134.

Nachteilig bei den bekannten Vorrichtungen ist insbesondere wegen der seitlich versetzt angeordneten Förderelemente, dass die Ablage der Legegutbestandteile einer signifikanten Streuung unterliegt, sodass ein signifikanter Anteil des Legegutes insbesondere seitlich ihres optimalen Platzes auf dem Erdboden abgelegt wird. Auch durch Prallbleche unterhalb des Ausgabebereiches konnte dieses Problem nicht gelöst werden. Das führt zu zu geringen oder zu großen Abständen von benachbarten Legegutbestandteilen oder von Reihen trennenden Furchen, wodurch entweder das Wachstum der resultierenden Pflanze eingeschränkt ist oder Bodenreserven ungenutzt bleiben.

Aufgabe der vorliegenden Erfindung ist die Bereitstellung einer gattungsgemäßen Vorrichtung, mit der eine genauere Positionierung der Legegutbestandteile auf dem Erdboden erreicht wird.

Erfindungsgemäß ist dazu zumindest ein erstes der Förderelemente relativ zum Trägerelement von der ersten Position zumindest anteilig parallel zur Umlenkachse in eine zweite Position beweglich gelagert. Insbesondere ist zumindest die Hälfte der Förderelemente derart relativ zum Trägerelement beweglich gelagert. Bevorzugt ist die Vorrichtung derart ausgebildet, dass das zumindest eine erste Förderelement bzw. sämtliche erste Förderelemente im Betrieb während ihres Umlaufens zwischen dem Vorhalteraum und dem Ausgabebereich von der ersten Position in die zweite Position überführt werden. Durch die Möglichkeit der Bewegung des zumindest einen ersten Förderelements relativ zum Trägerelement insbesondere in eine zur Umlaufrichtung rechtwinklige Querrichtung kann jeder Legegutbestandteil entlang der Querrichtung an genau der Position abgelegt werden, die gewünscht ist. Dadurch kann jede Pflanze bestmöglich gedeihen und der Ernteertrag letztlich maximiert werden.

Die Vorrichtung ist insbesondere zum Pflanzen von Kartoffeln, Rüben, Zwiebeln, Zuckerrohr und/oder Knoblauch geeignet. Beim Legegut handelt es sich entsprechend insbesondere um Knollen oder Knollenbestandteile, Saatkörner, Steckzwiebeln und/oder Stecklinge, bevorzugt um Kartoffeln. Zu deren Aufnahme ist das Förderelement bevorzugt ausgebildet.

Der Bunker ist insbesondere wannenförmig und bildet den Vorhalteraum aus. Vor Aufnahme des Betriebs der Vorrichtung wird der Bunker mit Legegut befüllt. Die Vorrichtung umfasst insbesondere eine Mehrzahl von Fördervorrichtungen, die insbesondere in die Querrichtung voneinander beabstandet angeordnet sind und durch die die Vorrichtung zu einem gleichzeitigen Pflanzen einer Mehrzahl von Reihen des Legegutes ausgebildet ist.

Das Trägerelement der zumindest einen Fördervorrichtung ist insbesondere als biegeschlaffes, d.h. sich bei bei mangelnder Spannung oder Beabstandung der Enden des Trägerelementes in die Umlauf- oder eine Längsrichtung schwerkraftbedingt verformendes, Bauteil ausgebildet. Vorzugsweise ist das Trägerelement zumindest teilweise als Gurt, Band, Kette oder Rad ausgebildet. Das Trägerelement läuft im Betrieb in die Umlaufrichtung um und umläuft dabei zumindest zeitweise die Umlenkachse. Insbesondere ist das Trägerelement selbst oder ein Umlenkelement wie etwa eine Umlenkrolle, das zur Umlenkung des Trägerelements ausgebildet ist, drehbar um die Umlenkachse gelagert. Die Umlenkachse ist insbesondere horizontal und rechtwinklig zur bestimmungsgemäßen Fortbewegungsrichtung der Vorrichtung, d.h. in die Querrichtung verlaufend, orientiert.

An dem Trägerelement sind mehrere Förderelemente angeordnet. Die Förderelemente bilden insbesondere jeweils zumindest eine Mulde aus, in welcher sich beim Durchlaufen des Vorhalteraumes möglichst ein Legegutbestandteil anordnet. Bevorzugt haben die Förderelemente in die Umlaufrichtung durchgängige Ausnehmungen, wodurch sie im Betrieb neben der Förderfunktion eine Siebfunktion übernehmen. Bevorzugt sind sämtliche Förderelemente einheitlich ausgebildet.

Die Förderelemente durchlaufen im Betrieb, d.h. während des Umlaufens des Trägerelements, bevorzugt abwechselnd den Vorhalteraum und den Ausgabebereich. Im Vorhalteraum nimmt jedes Förderelement möglichst genau einen Legegutbestandteil auf und gibt ihn im Ausgabebereich wieder ab. Das heißt, dass sich die aufgenommenen Legebestandteile im Ausgabebereich von den Förderelementen trennen und insbesondere aus dem Ausgabebereich in Richtung des Erdbodens fallen.

Innerhalb des Vorhalteraumes sind die Förderelemente relativ zum Trägerelement zumindest abschnittsweise, insbesondere ausschließlich, in der jeweiligen ersten Position angeordnet. Die erste Position kann dabei insbesondere in die Querrichtung relativ zum Trägerelement je nach Förderelement unterschiedlich sein. Ein Teil der Förderelemente ist aus seiner ersten Position relativ zum Trägerelement in eine zweite Position beweglich, wozu er zumindest anteilig parallel zur Umlenkachse, d.h. insbesondere zumindest anteilig in die Querrichtung, beweglich ist. Das zumindest eine erste Förderelement ist dabei insbesondere zu demjenigen Abschnitt des Trägerelementes beweglich, an dem das erste Förderelement selbst unmittelbar angeordnet ist. Dadurch geht die Beweglichkeit über eine Beweglichkeit gemäß dem Stand der Technik hinaus, nach dem ein von einem Förderelement entfernter Abschnitt des Trägerelements aufgrund seiner Flexibilität selbstverständlich relativ zum Förderelement beweglich ist.

Das zumindest eine erste Förderelement ist bevorzugt im Betrieb und/oder im Stillstand der Fördervorrichtung relativ zum Trägerelement beweglich. Insbesondere hängt die Bewegung des Förderelementes relativ zum Trägerelement von einer Umlaufbewegung des Trägerelementes ab. Die Fördervorrichtung ist dabei insbesondere derart ausgebildet, dass das erste Förderelement zumindest anteilig während einer Aufwärts- und/oder Abwärtsbewegung von der ersten Position in die zweite Position bewegt wird.

Zur Umlenkung des Trägerelementes dienen insbesondere zumindest zwei Umlenkelemente, die um parallele Umlenkachsen umlaufen. Die Umlenkelemente sind insbesondere übereinander angeordnet, wodurch das Trägerelement einen Aufwärts- und einen Abwärtstrum hat. Der Aufwärtstrum bzw. die daran angeordneten Förderelemente liegen zumindest teilweise innerhalb des Vorhalteraums. Der Abwärtstrum bzw. die daran angeordneten Förderelemente verlaufen bevorzugt zumindest teilweise durch ein zu den Umlenkachsen ortsfestes Gehäuse, das ein Hinabfallen der Legegutbestandteile von den Förderelementen, auf denen sie im Abwärtstrum insbesondere aufliegen, verhindert. Alternativ zum Gehäuse weist die Fördervorrichtung Klemmfinger oder dgl. auf, die für eine Fixierung der Legegutbestandteile an den Förderelementen sorgen.

Vorzugsweise ist das erste Förderelement in der ersten Position einerseits einer Trägerelementlängsebene angeordnet und zumindest ein zweites der Förderelemente in der ersten Position andererseits der Trägerelementlängsebene angeordnet. Die Trägerelementlängsebene erstreckt sich parallel zur Umlaufrichtung und damit rechtwinklig zur Umlenkachse. Insbesondere ist die Trägerelementlängsebene derart angeordnet, dass sie das Trägerelement in zwei gleichbreite Hälften trennt. Die Anordnung der unterschiedlichen Förderelemente zu unterschiedlichen Seiten der Trägerelementlängsebene in ihrer ersten Position bedeutet, dass das erste und das zweite Förderelement innerhalb des Vorhalteraums und in die Umlaufrichtung betrachtet, zumindest zeitlich versetzt oder gleichzeitig, nebeneinander angeordnet sind. Dadurch beeinflussen sich das erste und das zweite Förderelement bei der Aufnahme eines jeweiligen Legegutbestandteils nicht negativ und kann die Aufnahme genau eines Legegutbestandteils pro Förderelement zuverlässig sichergestellt werden.

Bevorzugt gehört die Hälfte der Förderelemente der Fördervorrichtung zu einer Gruppe erster Förderelemente und eine zweite Hälfte der Förderelemente der Fördervorrichtung zu einer Gruppe zweiter Förderelemente. Entlang der Umlaufrichtung wechseln sich erste und zweite Förderelemente bevorzugt ab. Alternativ dazu weist die Fördervorrichtung vorzugsweise zumindest ein weiteres Förderelement oder eine Gruppe weiterer Förderelemente auf, das bzw. die nicht den vorgenannten Gruppen unterfällt. Das zumindest eine weitere Förderelement ist in seiner ersten Position bezogen auf die Querrichtung sowohl versetzt zu den ersten als auch versetzt zu den zweiten Förderelementen angeordnet.

Bevorzugt ist zumindest das zumindest eine erste Förderelement aus der ersten Position auf die Trägerelementlängsebene zu in die zweite Position beweglich. Besonders bevorzugt sind sowohl das zumindest eine erste Förderelement als auch das zumindest eine zweite Förderelement jeweils aus ihrer ersten Position auf die Trägerelementlängsebene zu in die zweite Position beweglich. Damit kommt es zumindest zu einer Verringerung eines Abstandes der unterschiedlichen Förderelemente in die Querrichtung. Hierdurch lässt sich der vorbeschriebene Vorteil innerhalb des Vorhalteraumes mit dem Vorteil wenig oder nicht voneinander in die Querrichtung beabstandeter Förderelemente in dem Ausgabebereich kombinieren, wodurch die Legegutbestandteile im Ausgabebereich bezogen auf die Querrichtung zumindest weitgehend aus einer übereinstimmenden Position ausgegeben werden.

Vorzugsweise sind das zumindest eine erste Förderelement in seiner zweiten Position und das zumindest eine zweite Förderelement, insbesondere auch in der zweiten Position, in Umlaufrichtung betrachtet zumindest teilweise hintereinander angeordnet. Das bedeutet insbesondere, dass bei einer Bewegung eines der Förderelemente in die zweite Position die Trägerelementlängsebene durchtreten wird. Insbesondere schneidet die Trägerelementlängsebene das erste und das zweite Förderelement in der zweiten Position jeweils. Besonders bevorzugt schneidet die Trägerelementlängsebene sämtliche Förderelemente in ihrer zweiten Position mittig. Damit haben das erste und das zweite Förderelement in der zweiten Position bezogen auf die Querrichtung eine übereinstimmende Position relativ zum Trägerelement. Das erste und das zweite Förderelement sind dabei zueinander insbesondere spiegelsymmetrisch und in die Umlaufrichtung versetzt gelagert. Alternativ ist lediglich das zumindest eine erste Förderelement relativ zum Trägerelement beweglich und wird das zumindest eine zweite Förderelement bereits in seiner ersten Position von der Trägerelementlängsebene insbesondere mittig geschnitten. In diesem Fall schneidet die Trägerelementlängsebene das Trägerelement insbesondere außermittig und/oder sind insbesondere sämtliche Förderelemente in ihrer ersten Position gleich weit vom nächsten seitlichen Rand des Trägerelementes beabstandet. Diese enge Zusammenführung der Förderelemente verstärkt den vorgenannten Vorteil. Im Einzelnen lässt sich der Vorteil hierdurch derart ausbauen, dass sämtliche Legegutbestandteile im Ausgabebereich von einer identischen Position insbesondere bezogen auf die Querrichtung ausgegeben werden.

Bevorzugt ist das erste Förderelement in der ersten und/oder zweiten Position bezogen auf die Umlaufrichtung versetzt zu dem zweiten Förderelement in der ersten und/oder zweiten Position angeordnet. Insbesondere ändert das zumindest eine bewegliche Förderelement bei seiner Bewegung von der ersten in die zweite Position seine auf die Umlaufrichtung bezogene Stellung relativ zum Trägerelement nicht. Die bevorzugt abwechselnd angeordneten ersten und zweiten Förderelemente haben insbesondere zu den jeweils benachbarten Förderelementen einen einheitlichen Abstand.

Die Fördervorrichtung ist vorzugsweise derart ausgebildet, dass das erste Förderelement während des Umlaufs des Trägerelements entlang der Umlaufrichtung zwischen dem Vorhalteraum und dem Ausgabebereich von der ersten in die zweite Position überführt wird. Die Überführung erfolgt dabei insbesondere allmählich oder stufenweise. Zusätzlich ist die Fördervorrichtung insbesondere zu einer Rückführung des ersten Förderelementes von der zweiten Position in die erste Position zwischen dem Ausgabebereich und dem Vorhalteraum ausgebildet. Insbesondere wird jedes Förderelement der Fördervorrichtung pro Umlauf einmal aus der ersten in die zweite Position und einmal aus der zweiten in die erste Position überführt.

Bevorzugt weist die Vorrichtung bzw. deren Fördervorrichtung zumindest ein erstes zu einem Maschinenrahmen der Vorrichtung im Betrieb insbesondere ortsfestes Führungselement auf. Das Führungselement weist zumindest eine Führungsfläche auf. Das Führungselement ist zu einer teilweisen Bewegung zumindest des ersten Förderelementes von der ersten Position in die zweite Position und/oder zurück während des Umlaufes des Trägerelementes ausgebildet. Dabei liegt die Führungsfläche insbesondere zumindest zeitweise an dem Förderelement oder einem dazu ortsfesten Bauteil an. Das Führungselement ist insbesondere als Führungsschiene, Führungsspalt und/oder durch Rollen ausgebildet. Insbesondere ist das Führungselement im Betrieb nicht mit dem Trägerelement umlaufend ausgebildet. Durch das Führungselement wird eine zuverlässige Bewegung zumindest des ersten Förderelements von der ersten Position in die zweite Position und/oder von der zweiten Position in die erste Position zumindest teilweise, insbesondere vollständig erreicht.

Alternativ dazu ist das zumindest eine erste Förderelement insbesondere derart gelagert, dass es schwerkraftbedingt von der ersten in die zweite Position und/oder zurück beweglich ausgebildet ist. Alternativ oder zusätzlich ist das Förderelement mit einem insbesondere im Betrieb mit dem Trägerelement umlaufenden Rückstellelement wie einer Feder gekoppelt, durch die das Förderelement von der ersten in die zweite Position und/oder zurück beweglich ist. Dabei führt die Umlenkung des Trägerelementes um die Umlenkachse insbesondere zu einem schwerkraftbedingten Umklappen des Förderelementes, mit dem eine Bewegung in die Querrichtung notwendigerweise einhergeht.

Insbesondere ist der Gruppe erster Förderelemente ein erstes Führungselement und der Gruppe zweiter Förderelemente ein zweites Führungselement zugeordnet. Das erste und das zweite Führungselement sind dabei insbesondere spiegelsymmetrisch bezogen auf die Trägerelementlängsachse ausgebildet. Jedes Führungselement ist dabei ein- oder mehrteilig und/oder weist eine oder zwei Führungsflächen auf, die ein geführtes Element insbesondere beidseitig führen.

Bevorzugt variiert ein Abstand oder eine Orientierung der Führungsfläche relativ zur Trägerelementlängsebene. Alternativ oder zusätzlich dazu variiert der Abstand oder die Orientierung zu einer zur Trägerelementlängsebene rechtwinkligen Trägerelementquerebene, die sich lokal parallel zur Umlaufrichtung und insbesondere rechtwinklig zur Trägerelementlängsebene erstreckt. Insbesondere ist die Führungsfläche derart ausgebildet, dass das geführte Förderelement allmählich in die Querrichtung be- und anschließend entschleunigt wird. Insbesondere ist das Führungselement dazu als sich in die Umlaufrichtung der Trägerelementlängsebene näherndes Blech oder Kunststoffbauteil ausgebildet oder als sich um eine zur Umlaufrichtung parallele Achse in die Umlaufrichtung verdrehendes Blech oder Kunststoffbauteil ausgebildet.

Das zumindest eine Führungselement ist derart positioniert, dass im Betrieb zumindest das erste Förderelement zumindest anteilig abwärts an dem Führungselement entlangbewegt wird. Das bedeutet insbesondere, dass das Führungselement zumindest teilweise im Bereich des Abwärtstrums angeordnet ist. Das führt dazu, dass die Förderelemente im Vorhalteraum bis zur maximalen Höhe des Trägerelements in ihrer ersten Position verbleiben können um die damit einhergehenden Vorteile möglichst umfangreich zu nutzen. Insbesondere erlaubt die vorbeschriebene Positionierung des Führungselementes eine kompaktere Bauweise der Fördervorrichtung, die dadurch nicht zugunsten des Führungselementes weiter nach oben gestreckt werden muss. Alternativ oder zusätzlich zu dieser Ausbildung ist zumindest ein Teil des Führungselementes im Bereich des Aufwärtstrums angeordnet, insbesondere um zumindest das erste Förderelement von der zweiten in die erste Position rückzuführen.

Vorzugsweise ist das erste Förderelement derart gelagert, dass es in der ersten Position und in der zweiten Position einen zumindest im Wesentlichen übereinstimmenden Abstand vom Trägerelement hat. Dadurch ragt das Förderelement in beiden Positionen gleichweit vom Trägerelement ab, was die einheitliche Ausbildung des Trägerelementes und umliegender Bauteile erleichtert. Alternativ oder zusätzlich ist das Förderelement in der ersten Position und in der zweiten Position bezogen auf die Umlaufrichtung relativ zum Trägerelement zumindest im Wesentlichen übereinstimmend positioniert. Das bedeutet, dass das Förderelement bei einer Verlagerung von der ersten in die zweite Position oder zurück nicht, auch nicht anteilig, in die Umlaufrichtung verlagert wird. Hierdurch wird hinsichtlich der genauen Positionierung der Legegutbestandteile eine Unsicherheit verursachende Variable vermieden.

Erfindungsgemäß ist dem ersten Förderelement eine Bewegungseinrichtung zugeordnet, die zumindest ein ortsfest am Trägerelement angeordnetes und zumindest mittelbar mit dem ersten Förderelement gekoppeltes Fixierungselement umfasst.

Das Fixierungselement ist bevorzugt zumindest in einer Stellung des Förderelementes zumindest anteilig zwischen dem Trägerelement und dem Förderelement angeordnet und insbesondere starr ausgebildet. Das Fixierungselement ist insbesondere ein Kunststoff- oder Metall-Bauteil, das am Trägerelement vernietet oder verschraubt ist. Dabei handelt es sich insbesondere um ein am Trägerelement verspanntes Blech. Besonders bevorzugt umfasst die Bewegungseinrichtung ein weiteres Fixierungselement, das zum vorbeschriebenen Fixierungselement beweglich gelagert ist und ortsfest am ersten Förderelement angeordnet ist. Die beiden Fixierungselemente sind dabei besonders bevorzugt Schenkel eines Scharniers, insbesondere eines Filmscharniers. Hierdurch ist eine zuverlässige Lagerung des ersten Förderelementes erreicht. Alternativ zur Bewegungseinrichtung weist das Trägerelement bevorzugt zumindest eine längliche Ausnehmung pro erstem Förderelement auf, innerhalb derer das Förderelement relativ zum Trägerelement beweglich ist.

Vorzugsweise ist das erste Förderelement zumindest anteilig um eine Förderelementschwenkachse schwenkbar am Trägerelement angeordnet. Dazu sind insbesondere die vorgenannten Fixierungselemente mittels eines Schwenklagers miteinander verbunden. Eine Schwenkbewegung ist etwa gegenüber einer translatorischen Bewegung konstruktiv besonders einfach umsetzbar und dadurch die Vorrichtung besonders zuverlässig zu betreiben.

Die Beweglichkeit des ersten Förderelementes relativ zum Trägerelement geht insbesondere über eine reine Schwenkbewegung hinaus. Insbesondere wird die Schwenkbewegung von einer weiteren Beweglichkeit überlagert oder schließt sich zur Überführung des ersten Förderelementes aus der ersten Position in die zweite Position oder zurück an eine weitere Bewegung an. Die Schwenkachse der Schwenkbewegung ist dabei insbesondere ortsfest zum Trägerelement und läuft damit im Betrieb mit diesem um.

Die Förderelementschwenkachse ist im Betrieb bevorzugt zumindest zeitweilig parallel zur Umlaufrichtung angeordnet. Dabei ist die Förderelementschwenkachse dem Trägerelement in zumindest einer Position des Förderelementes bevorzugt näher als das Förderelement selbst oder dessen Mitte. Die Förderelementschwenkachse ist insbesondere nur zeitweilig parallel zur Umlaufrichtung, da diese nur zwischen den insbesondere zumindest zwei Umlenkelementen gerade orientiert ist wie auch die Förderelementschwenkachse. Durch diese Positionierung der Förderelementschwenkachse lässt sich eine Bewegung des Förderelementes in die Querrichtung erreichen, ohne dass dazu die Position des Legegutbestandteils relativ zum Förderelement, auf dem er aufliegt, verändert werden muss.

Besonders bevorzugt ist in die Umlaufrichtung betrachtet die Förderelementschwenkachse des ersten Förderelementes einerseits der Trägerelementlängsebene angeordnet und eine Förderelementschwenkachse des zweiten Förderelementes andererseits der Trägerelementlängsebene angeordnet. Dabei liegen die Förderelementschwenkachsen sämtlicher erster Förderelemente bevorzugt in einer zur Förderelementlängsebene parallelen Ebene, vorzugsweise ebenso wie die Förderelementschwenkachsen der zweiten Förderelemente. Durch die Beabstandungen der Förderelementschwenkachsen in die Querrichtung ist auch eine derartige Beabstandung der Förderelemente in ihrer ersten Position erleichtert und erfordert eine geringere Beabstandung der Förderelemente von der jeweiligen Förderelementschwenkachse. Dadurch ist wiederum die Konstruktion vereinfacht. Alternativ dazu sind zwar sämtliche Förderelemente um eine Förderelementschwenkachse schwenkbar, sind jedoch sämtliche Förderelementschwenkachsen in der Trägerelementlängsebene angeordnet. Dieser Aufbau erlaubt ein schmaleres Trägerelement.

Vorzugsweise umfasst die Vorrichtung bzw. die Fördervorrichtung zumindest ein ortsfest am ersten Förderelement angeordnetes Halteelement. Dieses ist insbesondere einstückig mit dem vorbeschriebenen weiteren Fixierungselement. Das Haltelement beabstandet das erste Förderelement bezogen auf die Förderelementschwenkachse in eine radiale Richtung von der Förderelementschwenkachse. Das Haltelement beabstandet das erste Förderelement von der Förderelementschwenkachse bevorzugt zumindest um eine Distanz, die der Hälfte einer Erstreckung des ersten Förderelementes in die radiale Richtung entspricht, die besonders bevorzugt zumindest der gesamten Erstreckung des ersten Förderelementes in die radiale Richtung entspricht. Hierdurch ist ein Hebelarm geschaffen, der auf konstruktiv einfache Weise eine weitere Verlagerung des ersten Förderelementes in die Querrichtung ermöglicht.

Das weitere Fixierungselement bzw. das Halteelement ist bevorzugt zu einer Verschwenkung relativ zum Trägerelement um zumindest 45° besonders bevorzugt um zumindest 90°, insbesondere zumindest 180° ausgebildet. Auch hierdurch wird eine weitreichende Beweglichkeit des ersten Förderelementes relativ zum Trägerelement bewirkt.

Vorzugsweise ist an dem ersten Förderelement ein erstes Halteelement angeordnet und an dem zweiten Förderelement ein zweites Halteelement angeordnet. Das erste und das zweite Halteelement sind dabei voneinander abweichend ausgebildet. Insbesondere sind das erste und das zweite Halteelement zueinander spiegelsymmetrisch ausgebildet oder in die Umlaufrichtung betrachtet spiegelsymmetrisch an dem Trägerelement bzw. Fixierungselement angeordnet. Durch die unterschiedliche Ausbildung der Halteelemente der unterschiedlichen Gruppen von Förderelementen ist auch die unterschiedliche Führung derer erleichtert. Bevorzugt bilden die unterschiedlichen Halteelemente unterschiedliche Angriffspunkte für das jeweilige zumindest eine Führungselement. Insbesondere handelt es sich bei den Halteelementen um Winkelbleche oder -kunststoffbauteile, deren Schenkel sich jeweils in die Umlaufrichtung flächig oder rundlich erstrecken.

In einer vorteilhaften Ausgestaltungsform der Erfindung ist die Förderelementschwenkachse angewinkelt, bevorzugt rechtwinklig, zur Umlaufrichtung und parallel zur Trägerelementlängsebene oder in der Trägerelementlängsebene angeordnet. Dadurch ist das erste Förderelement insbesondere in die Querrichtung kippbar. Bevorzugt weist das erste Förderelement zwei zueinander um die Förderelementschwenkachse angewinkelt angeordnete Ablagemulden auf. Der Winkel, um den die Ablagemulden zueinander angewinkelt angeordnet sind entspricht insbesondere einer Winkeldifferenz zwischen 180° und dem Winkel, um den das erste Förderelement um die Förderelementschwenkachse schwenkbar ist. Bevorzugt sind die Ablagemulden zueinander um 90° angewinkelt angeordnet. Die Ablagemulden sind dabei einander zumindest anteilig zugewandt, so dass ein Legegutbestandteil von einer der Legemulden in die jeweils andere der Legemulden ohne weiteres übertreten kann. Vorteil dieser Variante ist ein besonders geringer Bauraumbedarf des Förderelementes sowie eine schnelle Verstellbarkeit dessen.

Das erste Förderelement ist bevorzugt zumindest anteilig in eine zur Trägerelementlängsebene zumindest anteilig, insbesondere vollständig, rechtwinklige Schubrichtung verschieblich am Trägerelement angeordnet. Dazu weist die Bewegungseinrichtung insbesondere ein Linearlager auf. Dieses ist insbesondere als Gleit- oder Kugel- bzw. Rollenlager ausgebildet. Die Schubrichtung fällt insbesondere mit der Querrichtung zusammen. Durch diese Form der Beweglichkeit des ersten Förderelements lässt sich der Legegutbestandteil auf kürzestem Wege in die Querrichtung verlagern und insbesondere das Führungselement besonders einfach ausbilden.

Bevorzugt ist das erste Förderelement mittels eines Koppelgetriebes am Trägerelement angeordnet. Das Koppelgetriebe bildet insbesondere eine Parallelführung aus. Die Koppelschwenkachsen des Koppelgetriebes sind im Betrieb insbesondere zumindest zeitweilig parallel zur Umlaufrichtung angeordnet. Insbesondere umfasst die Bewegungseinrichtung zwei Fixierungselemente sowie zwei die Parallelführung ausbildende Koppelglieder. Alternativ oder zusätzlich umfasst das Koppelgetriebe bevorzugt ein Profil aus flexiblem Material, durch dessen elastische Verformung, insbesondere Biegung, die Parallelführung erreicht wird. Durch diese Ausbildung wird zum einen eine Änderung der Orientierung des Legegutbestandteils relativ zum Trägerelement bei einer Bewegung des ersten Förderelementes verhindert. Zum anderen wird die Beweglichkeit einzig durch Schwenklager realisiert, die besonders zuverlässig sind.

Bevorzugt ist die Förderelementschwenkachse angewinkelt, bevorzugt rechtwinklig, zur Trägerelementlängsebene angeordnet. Hierdurch lässt sich insbesondere ein Klemmen von Legegutbestandteilen zwischen dem ersten Förderelement und dem Trägerelement oder dem Fixierungselement realisieren und somit auch im Abwärtstrum eine Trennung der Legegutbestandteile von den Förderelementen vermeiden, die sie im Vorhalteraum aufgenommen haben.

Vorzugsweise ist das erste Förderelement derart gelagert, dass es unabhängig voneinander verschieblich und verschwenkbar ist. Das bedeutet, dass es unabhängig von einer Stellung, in die es verschoben ist, schwenkbar ist und ebenso unabhängig von einer Stellung, in die es verschwenkt ist, verschiebbar ist. Somit ist das erste Förderelement nicht nur entlang einer vorgegebenen Bewegungsbahn beweglich, sondern seine Lage durch mehrere Freiheitsgrade veränderbar. Insbesondere ist es auch gleichzeitig anteilig verschieblich und anteilig verschwenkbar. Alternativ dazu ist es lediglich nacheinander verschieblich und verschwenkbar. Die Vorrichtung weist für die unterschiedlichen Bewegungsmöglichkeiten insbesondere je ein Führungselement auf, wodurch bevorzugt ein Verschiebeführungselement und ein Verschwenkführungselement vorliegt. Die Schwenkachse, in die das Förderelement in diese Ausbildung verschwenkbar ist, ist insbesondere rechtwinklig zur Trägerelementlängsebene angeordnet. Das weitere Fixierungselement umfasst dabei insbesondere eine von dem Trägerelement weggerichtete Kurbel, die wohl verschwenkbar als auch in die Richtung der Schwenkachse verschieblich ist. Hierdurch lassen sich Legegutbestandteile zunächst klemmen und dann in die Querrichtung verschieben, um ein Hinabfallen des Legegutbestandteils ob der Querbeschleunigung des Förderelementes zu vermeiden. Alternativ lassen sich die Legegutbestandteile zuerst verschieben und anschließend klemmen,

Vorzugsweise ist das erste Förderelement mittels eines wenigstens abschnittsweise zumindest im Wesentlichen bogen- oder spiralsegmentförmigen Halteelementes anteilig um eine zur Umlenkachse parallele Schwenkachse verschwenkbar. Alternativ oder zusätzlich ist das erste Förderelement mittels des Halteelementes anteilig in eine zur Trägerelementlängsebene rechtwinklige Schubrichtung verschieblich am Trägerelement angeordnet. In diesem Fall hat das erste Förderelement insbesondere nur einen Freiheitsgrad und ist entlang einer vorgegebenen Bewegungsbahn beweglich. Bei der Bewegung handelt es sich entsprechend um eine komplexe, überlagerte Bewegung, die die vorgenannten Vorteile kombiniert und gleichzeitig einen möglichst kurzen Weg realisiert, entlang dessen das Förderelement zu bewegen ist.

Vorzugsweise ist das erste Förderelement derart am jeweiligen Trägerelement angeordnet, dass das erste Förderelement zumindest in der ersten Position oder in der zweiten Position aus einer Radialrichtung betrachtet, d.h. in einer Draufsicht, quer zur Trägerelementlängsebene über das Trägerelement übersteht. Insbesondere steht das Förderelement zu einem überwiegenden Teil seitlich über das Trägerelement über. Dies trifft insbesondere auf sämtliche relativ zum Trägerelement beweglichen Förderelemente, besonders bevorzugt auf sämtliche Förderelemente zu. Diese Ausbildung ermöglicht ein erleichtertes Führen der Förderelemente sowie eine weitergehende Bewegung derer. Die Radialrichtung ist dabei parallel zur Trägerelementlängsebene oder darin und quer zur Umlaufrichtung angeordnet.

Das erste Förderelement hat bevorzugt eine erste Seite und eine zweite Seite. Die erste Seite ist innerhalb zumindest eines Teils des Vorhalteraums nach oben gerichtet und muldenförmig ausgebildet. Die zweite Seite ist innerhalb zumindest eines Teils des Vorhalteraums nach unten gerichtet und insbesondere zumindest im Wesentlichen spiegelsymmetrisch zur ersten Seite muldenförmig ausgebildet. Insbesondere weist jede Seite des Förderelementes zumindest eine Ablagemulde auf. Dadurch dass das Förderelement beidseitig mit einer Ablagemulde ausgestattet ist, wird sowohl die Lage eines während einer Aufwärtsbewegung des Förderelementes auf diesem aufliegenden Legegutbestandteils stabilisiert als auch die Lage eines während einer Abwärtsbewegung des Förderelementes auf seiner gegenüberliegenden Seite aufliegenden Legegutbestandteils stabilisiert. Insbesondere treten die Legegutbestandteile im Bereich einer oberen Umlenkung des Trägerelementes von dem Förderelement, welches sie im Vorhalteraum aufgenommen hat, zu einem in Umlaufrichtung vorlaufenden Förderelement über und legen sich auf dessen zweiter Seite ab. Hierdurch wird ein zeitlich unregelmäßiges Ablegen von Legegutbestandteilen vermieden.

Weiterhin wird die Aufgabe gelöst durch eine Kartoffellegemaschine mit einer Koppelvorrichtung zur Kopplung der Kartoffellegemaschine mit einer Zugmaschine. Außerdem weist die Kartoffellegemaschine eine vor- und/oder nachbeschriebene Vorrichtung auf, die insbesondere eine Mehrzahl von Fördervorrichtungen umfasst. Den Fördervorrichtungen ist dabei bevorzugt jeweils zumindest ein Scharelement zur Erzeugung einer Furche zugeordnet, wobei der Ausgabebereich bezogen auf eine Fahrtrichtung hinter dem Scharelement angeordnet ist. Im Betrieb wird durch das Scharelement eine Furche aufgerissen, in welcher die Legegutbestandteile abgelegt werden. Anschließend wird die Furche geschlossen und werden die Legegutbestandteile mit Erde überdeckt und dazu insbesondere ein Damm geformt.

Weitere Einzelheiten und Vorteile der Erfindung sind den nachfolgend beschriebenen, schematisch dargestellten Figuren zu entnehmen; es zeigen:
- Fig. 1: eine perspektivische Darstellung einer erfindungsgemäßen Kartoffellegemaschine,
- Fig. 2: eine perspektivische, schematische Darstellung einer ersten erfindungsgemäßen Vorrichtung,
- Fig. 3: ein Längsschnitt der Vorrichtung gemäß Fig. 2,
- Fig. 4: eine schematisch dargestellte Draufsicht einer ersten Fördervorrichtung,
- Fig. 5: eine schematisch dargestellte Draufsicht einer zweiten Fördervorrichtung,
- Fig. 6: eine schematisch dargestellte Draufsicht einer dritten Fördervorrichtung,
- Fig. 7: eine perspektivische Darstellung einer Mehrzahl von am selben Trägerelement angeordneten Förderelementen,
- Fig. 8: eine perspektivische Darstellung eines weiteren Förderelementes mit einer Bewegungseinrichtung,
- Fig. 9: eine Darstellung zweier weiterer am selben Trägerelement angeordneter Förderelemente mit unterschiedlichen Bewegungseinrichtungen,
- Fig. 10: eine schematisch dargestellte Rückansicht auf eine vierte Fördervorrichtung,
- Fig. 11: eine schematisch dargestellte Frontansicht auf die vierte Fördervorrichtung,
- Fig. 12: eine schematisch dargestellte Rückansicht auf eine fünfte Fördervorrichtung,
- Fig. 13: eine schematisch dargestellte Seitenansicht der fünften Fördervorrichtung,
- Fig. 14: eine schematisch dargestellte Frontansicht auf die fünfte Fördervorrichtung,
- Fig. 15: eine schematisch dargestellte Rückansicht auf eine sechste Fördervorrichtung,
- Fig. 16: eine schematisch dargestellte Frontansicht auf die sechste Fördervorrichtung,
- Fig. 17: eine weitere Frontansicht der sechsten Fördervorrichtung
- Fig. 18: eine schematisch dargestellte Rückansicht einer siebten Fördervorrichtung,
- Fig. 19: eine schematisch dargestellte Frontansicht der siebten Fördervorrichtung,
- Fig. 20: eine perspektivische, abschnittsweise Darstellung eines Trägerelementes einer achten Fördervorrichtung.

Die nachfolgend erläuterten Merkmale der erfindungsgemäßen Ausführungsbeispiele können auch einzeln oder in anderen Kombinationen als dargestellt oder beschrieben Gegenstand der Erfindung sein, stets aber zumindest in Kombination mit den Merkmalen des Anspruchs 1. Sofern sinnvoll sind funktional gleichwirkende Teile mit identischen Bezugsziffern versehen.

Die in den Figuren in unterschiedlichen Ausführungsbeispielen und Bestandteilen dargestellte erfindungsgemäße Vorrichtung 2 ist ausgebildet zu einem Vereinzeln von Legegut, das aus Legegutbestandteilen 20 wie z. B. Kartoffeln besteht. Die Vorrichtung 2 umfasst dazu einen Vorhalteraum 6, der durch einen Bunker 8 ausgebildet wird. Außerdem umfasst die Vorrichtung 2 zumindest eine Fördervorrichtung 10 zum Ablegen einer Reihe des Legegutes.

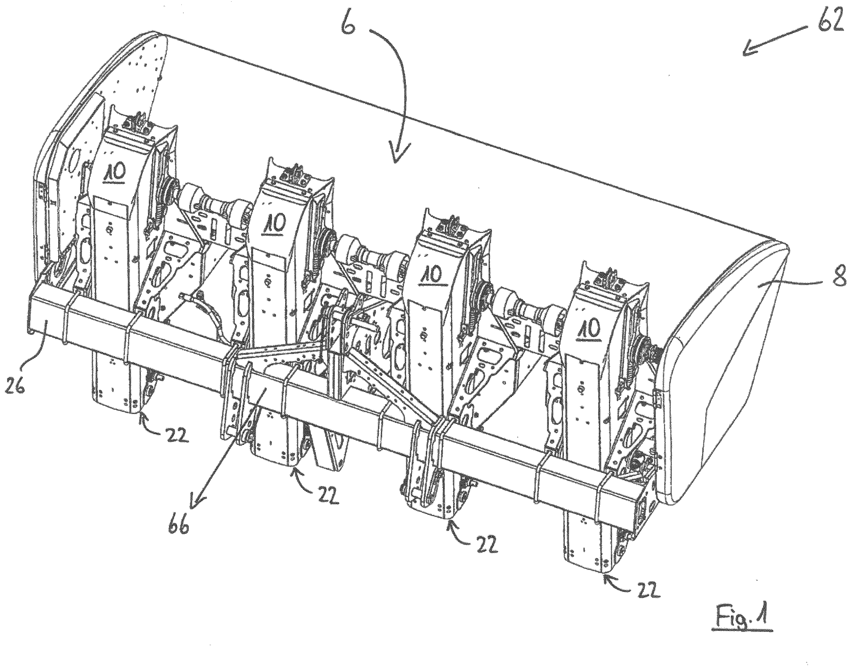

Die in Fig. 1 dargestellte und die Vorrichtung 2 umfassende Kartoffellegemaschine 62 weist im Einzelnen vier Fördervorrichtungen 10 auf, die in einer Fahrtrichtung 66 dem Bunker 8 vorgeordnet sind. Die Kartoffellegemaschine 62 weist pro Fördervorrichtung 10 insbesondere ein nicht dargestelltes Scharelement zur Erzeugung einer Furche auf. Jede Fördervorrichtung 10 hat dabei einen Ausgabebereich 22, vor dem bezogen auf die Fahrtrichtung 66 im Betrieb die Furche erzeugt wird und von dem aus das Legegut von der Vorrichtung 2 abgegeben wird.

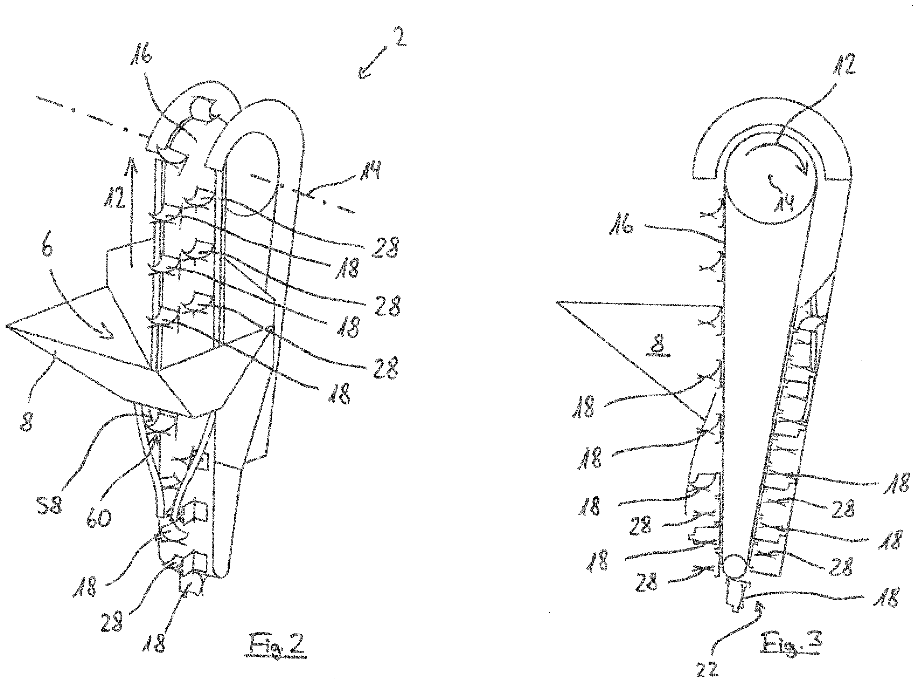

Die dargestellten Fördervorrichtungen 10 weisen je ein Trägerelement 16 auf, das im Betrieb in eine Umlaufrichtung 12 und um eine Umlenkachse 14 umläuft (vgl. insbesondere Fig. 2). An dem Trägerelement 16 sind dabei eine Mehrzahl von Förderelementen 18, 28 angeordnet. Im Betrieb verlaufen die Förderelemente 18, 28 zur Aufnahme je eines Legegutbestandteils 20 relativ zum Trägerelement 16 jeweils in einer ersten Position durch den Vorhalteraum 6. Zur Abgabe des Legegutbestandteils 20 verlaufen die Förderelemente 18, 28 in der Folge durch den Ausgabebereich 22. Fig. 3 verdeutlicht, dass das Trägerelement 16 zwischen dem Vorhalteraum 6 und dem Ausgabebereich 22 durch eine obere Umlenkrolle umgelenkt wird und zumindest in diesem Ausführungsbeispiel nahe des Ausgabebereichs 22 erneut umgelenkt wird.

Sämtliche Förderelemente 18, 28 der dargestellten Ausführungsbeispiele sind relativ zum Trägerelement 16 aus der ersten Position, in der sie durch den Vorhalteraum 6 verlaufen, zumindest anteilig parallel zur Umlenkachse 14 in eine zweite Position beweglich gelagert. In dieser zweiten Position verlaufen die Förderelemente 18, 28 in den Ausgabebereich 22.

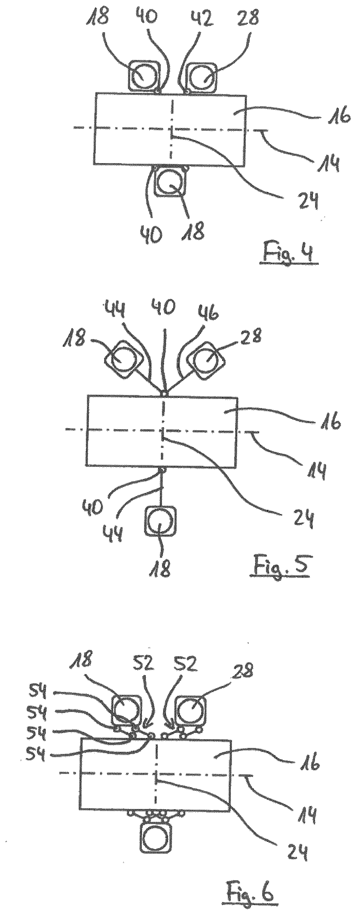

Befinden sich bezogen auf die Umlaufrichtung 12 benachbarte Förderelemente 18, 28 jeweils in ihrer ersten Position, ist ihr Abstand bezogen auf die zur Umlenklachse 14 parallele Querrichtung maximal (siehe etwa Fig. 4, 5 und 6, jeweils oben). Befinden sich dieselben Förderelemente 18, 28 der dargestellten Ausführungsbeispiele in der zweiten Position, sind sie in die Umlaufrichtung 12 betrachtet hintereinander angeordnet (Fig. 4, 5, und 6, jeweils unten).

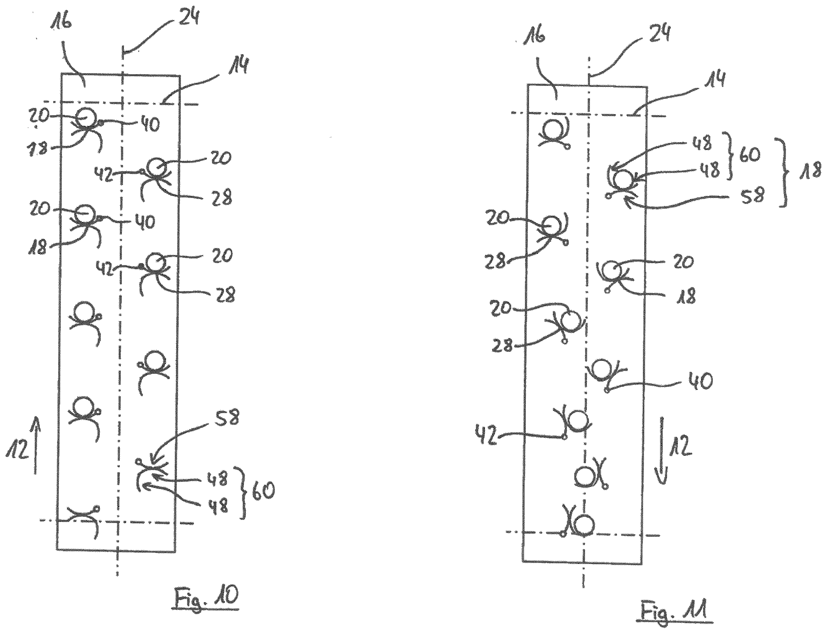

Die Förderelemente 18, 28 sind zu ihrer Überführung aus der ersten in die zweite Position jeweils auf eine Trägerelementlängsebene 24 zu beweglich. Diese erstreckt sich vertikal und in die Fahrtrichtung 66 und schneidet das Trägerelement 16 insbesondere mittig (vgl. Fig. 10 ff.). Dabei ist die Trägerelementlängsebene 24 auch zwischen den ersten Förderelementen 18 und den zweiten Förderelementen 28 angeordnet. Die sind bezogen auf die Umlaufrichtung 12 abwechselnd am Trägerelement 16 angeordnet und in die Umlaufrichtung 12 betrachtet gespiegelt gelagert.

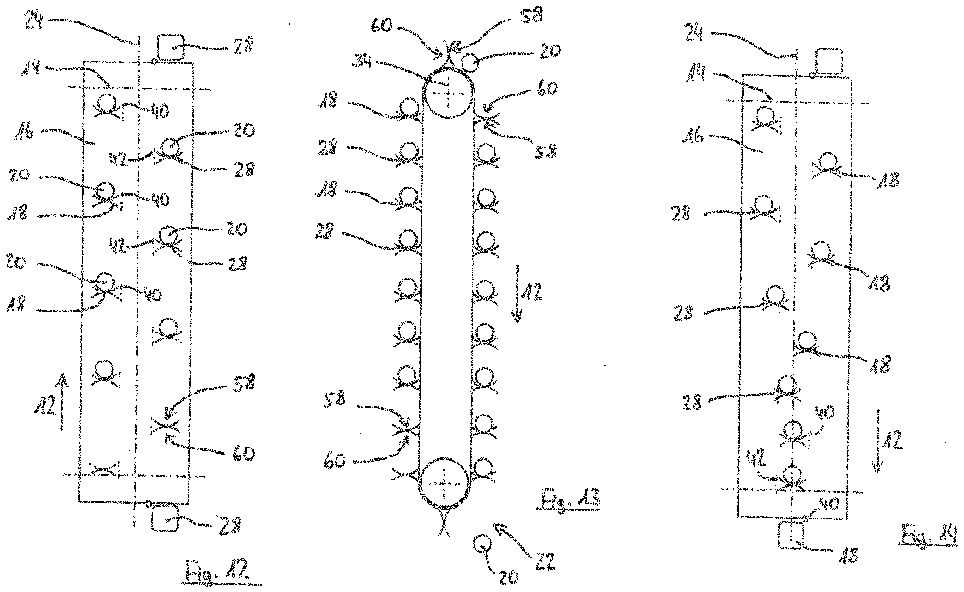

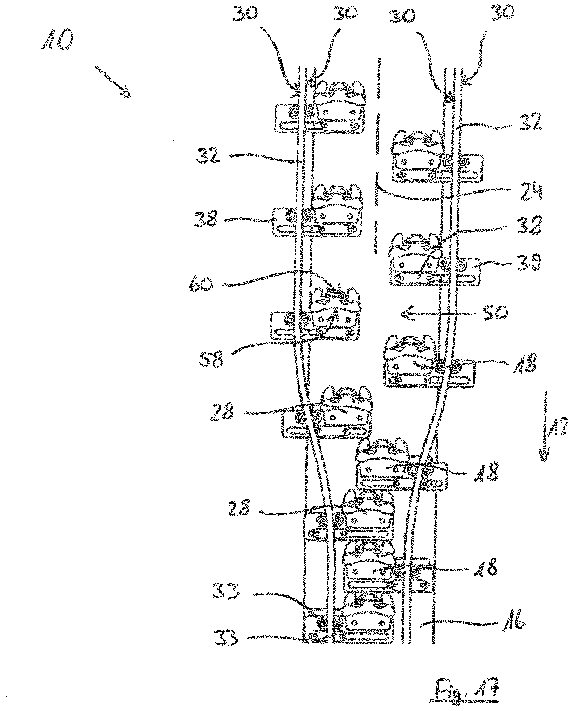

Die dargestellten Fördervorrichtungen 10 sind zur Überführung sämtlicher Förderelemente 18, 28 von der ersten Position in die zweite Position während des Betriebes und entlang der Umlaufrichtung 12 zwischen dem Vorhalteraum 6 und dem Ausgabebereich 22 ausgebildet. Hierzu hat die Vorrichtung 2 zumindest ein zu einem Maschinenrahmen 26 oder Fördervorrichtungsrahmen ortfestes Führungselement 32 (vgl. Fig. 17), das zumindest eine Führungsfläche 30 ausbildet. Mit der Bewegung des Trägerelementes 16 in die Umlaufrichtung 12 kommt es durch die Führungselemente 32 zwangsweise zu einer Bewegung der Förderelemente 18, 28. Je nach Aufbau der Fördervorrichtung 10 variiert ein Abstand oder eine Orientierung der Führungsfläche 30 zur Trägerelementlängsebene 24 und/oder zu einer zur Trägerelementlängsebene 24 rechtwinkligen Trägerelementquerebene 34 (vgl. Fig. 13), in der die Umlenkachse 14 angeordnet ist. Die Trägerelementquerebene 34 erstreckt sich lokal parallel zur Umlaufrichtung 12. Das Führungselement 32 ist dabei bevorzugt derart positioniert, dass die Förderelemente 18, 28 in Betrieb abwärts an dem Führungselement 32 entlangbewegt werden.

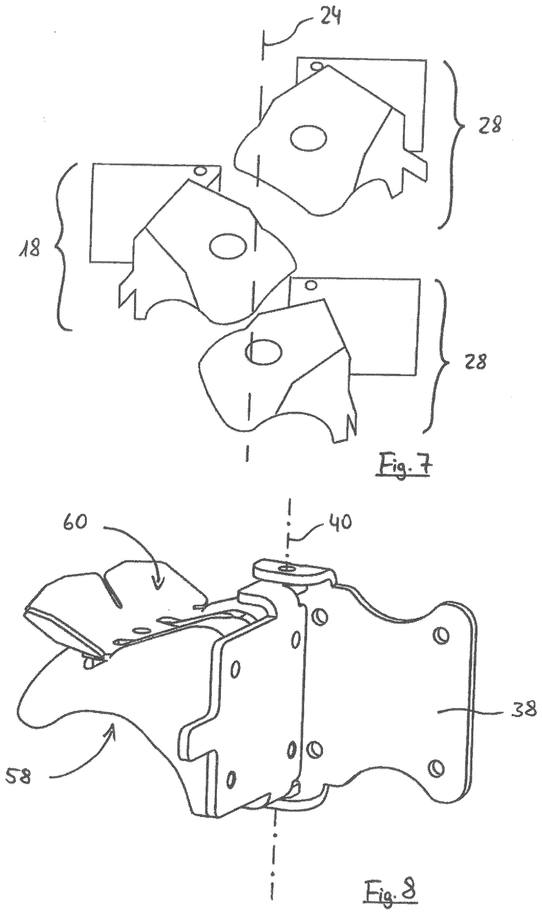

Die Förderelemente 18, 28 sind gemäß einem der Teil der Ausführungsbeispiele derart am Trägerelement 16 gelagert, dass mit ihrer Überführung von der ersten in die zweite Position keine Relativbewegung in die Umlaufrichtung 12 relativ zum Trägerelement 16 stattfindet. Außerdem ist ein Abstand des Trägerelementes 16 zu den Förderelementen 18, 28 in der ersten Position bevorzugt ebenso groß wie in ihrer zweiten Position (vgl. Fig. 4, 6). Zur Umsetzung der Überführbarkeit der Förderelemente 18, 28 ist diesen in den dargestellten Ausführungsbeispielen eine Bewegungseinrichtung zugeordnet. In den Ausführungsbeispielen gemäß den Fig. 8, 9 und 17 umfasst die Bewegungseinrichtung ein ortsfest am Trägerelement 16 angeordnetes Fixierungselement 38.

Gemäß einem Teil der dargestellten Ausführungsbeispiele sind die Förderelemente 18, 28 zumindest anteilig um jeweilige Förderelementschwenkachsen 40, 42 schwenkbar am Trägerelement 16 angeordnet (vgl. Fig. 2 - 5, 7 - 14, 18 und 19). Insbesondere sind die Förderelementschwenkachsen 40, 42 im Betrieb zumindest zeitweilig parallel zur Umlaufrichtung 12 angeordnet, wodurch die jeweiligen Förderelemente 18, 28 bezogen auf die Umlaufrichtung 12 seitlich verschwenkt werden können. Gemäß einem Teil der genannten Ausführungsbeispiele (siehe insbesondere Fig. 4) sind eine Förderelementschwenkachse 40 eines ersten Förderelementes 18 und eine Förderelementschwenkachse 42 eines zweiten Förderelementes 28 betrachtet in die Umlaufrichtung 12 nicht koaxial, sondern zu unterschiedlichen Seiten der Trägerelementlängsebene 24 angeordnet. Insbesondere sind die Förderelementschwenkachsen 40, 42 so angeordnet, dass die Förderelemente 18, 28 in Ihrer zweiten Stellung in die Umlaufrichtung 12 betrachtet mittig hintereinanderliegen. Überführt werden die Förderelemente 18, 28 dabei entlang eines Abwärtstrums des Trägerelementes 16 (vgl. Fig. 14).

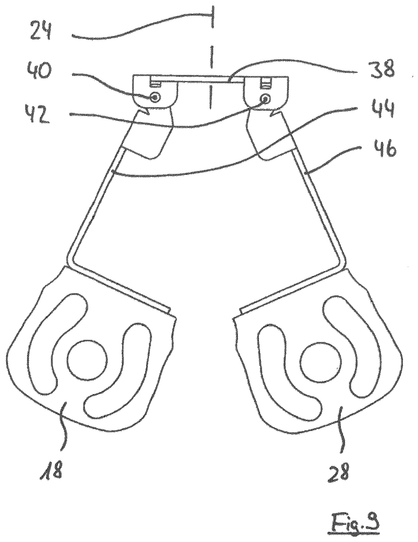

Die Ausführungsbeispiele gemäß den Fig. 5 und 9 zeigen an den jeweiligen Förderelementen 18, 28 ortsfest angeordnete Halteelemente 44, 46. Durch die Halteelemente 44, 46 werden die Förderelemente 18, 28 bezogen auf die jeweilige Förderelementschwenkachse 40, 42 in eine radiale Richtung von der jeweiligen Förderelementschwenkachse 40, 42 beabstandet. Die Halteelemente 44, 46 sind dabei gemäß Fig. 9 schwenkbeweglich mit dem Fixierungselement 38 gekoppelt. Die Halteelemente 44, 46 sind bezogen auf die Trägerelementlängsebene 24 zueinander spiegelsymmetrisch angeordnet, wodurch die Gruppe der ersten Förderelemente 18 einfach von der Gruppe zweiter Förderelemente 28 getrennt geführt werden kann.

In den Ausführungsbeispielen gemäß den Fig. 10 und 11 zeigen eine Fördervorrichtung 10 mit schwenkbar gelagerten Förderelementen 18, 28, wobei die Förderelementschwenkachsen 40, 42 rechtwinklig zur Umlaufrichtung 12 und parallel zur Trägerelementlängsebene 24 angeordnet sind. Außerdem weisen die Förderelemente 18, 28 in diesem Ausführungsbeispiel zwei zueinander angewinkelt angeordnete Ablagemulden 48 auf. Wie Fig. 11 verdeutlicht, werden die Förderelemente 18, 28 entlang des Abwärtstrums des Trägerelementes 16 zur Trägerelementlängsebene 24 um 90° gekippt, wobei der aufliegende Legegutbestandteil 20 automatisch von einer ersten Ablagemulde 48, die in der zweiten Position seitlich vom Legegutbestandteil 20 angeordnet ist in eine zweite Ablagemulde 48 gelangt, die in der ersten Position seitlich des Legegutbestandteils 20 angeordnet ist.

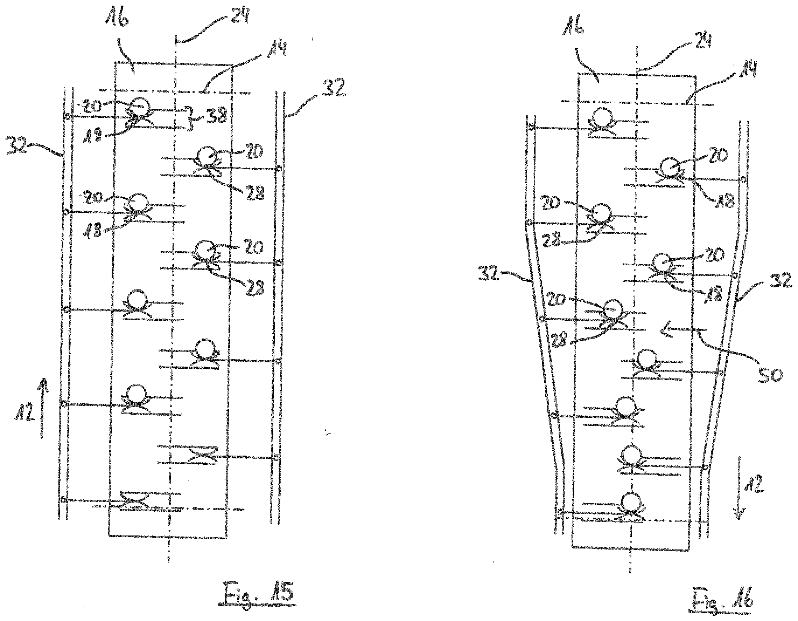

Bei den Ausführungsbeispielen gemäß den Fig. 15 - 19 sind die Förderelemente 18, 28 zumindest anteilig in eine zur Trägerelementlängsebene 24 rechtwinklige Schubrichtung 50 verschieblich am Trägerelement 16 angeordnet. Dabei sind die unterschiedlichen Förderelemente 18, 28 jeweils in die Querrichtung auf die Trägerelementlängsebene 24 zu bis zur Mitte des Trägerelementes 16 verschieblich. Die Ausführungsform gemäß Fig. 17 weist dazu pro Förderelement 18, 28 eine Linearführung 39 um das Fixierungselement 38 auf. Die Linearführung 39 weist dabei zwei Räder 33 auf, die im Betrieb beidseitig des Führungselementes 32 angeordnet sind.

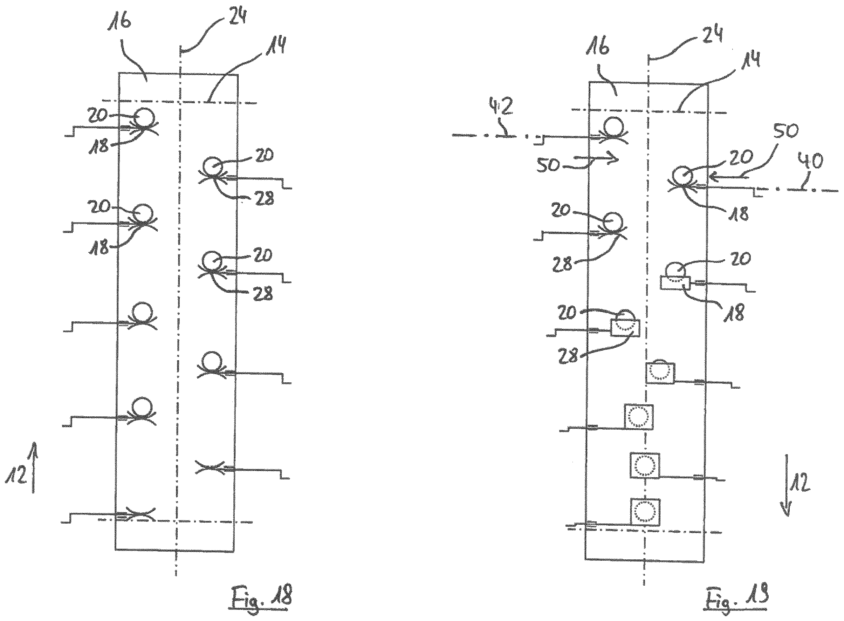

Bei den Ausführungsbeispielen gemäß den Fig. 18 und 19 sind die Förderelemente 18, 28 sowohl in die Schubrichtung 50 verschieblich als auch um eine zur Trägerelementlängsebene 24 rechtwinklige Förderelementschwenkachse 40, 42 schwenkbar. Für die Schwenk- und für die Schubbewegung existieren dabei bevorzugt unterschiedliche Führungselemente 32, die eine Verschiebung unabhängig von einer Verschwenkung machen und vorliegend nicht dargestellt sind.

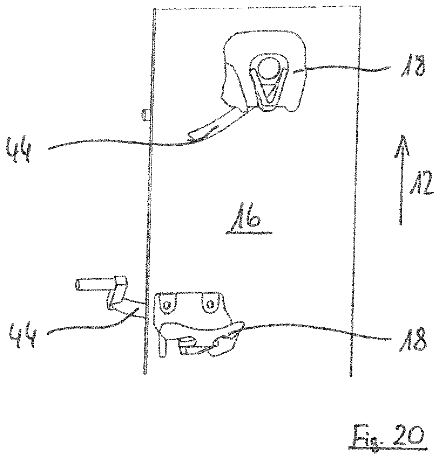

In dem Ausführungsbeispiel gemäß Fig. 20 ist den Förderelementen 18 jeweils ein bogen- oder spiralförmiges Halteelement 44 zugeordnet. Hierdurch haben die Förderelemente 18 zwar nur einen Freiheitsgrad, lassen sich dadurch jedoch eine komplexe, überlagerte Bewegung beschreibend verschieben und um eine zur Trägerelementlängsebene 24 rechtwinklige Schwenkachse verschwenken.

Das Ausführungsbeispiel gemäß Fig. 6 weist dagegen ein Koppelgetriebe 52 pro Förderelement 18, 28 auf, dass eine Parallelführung ausbildet. Die Koppelschwenkachsen 54 der zwei Koppelglieder jedes Koppelgetriebes 52 verlaufen dabei im Betrieb zumindest zeitweilig parallel zur Umlaufrichtung 12.

In jedem gezeigten Ausführungsbeispiel haben die Förderelemente 18, 28 eine erste Seite 58 und eine zweite Seite 60. Die erste Seite 58 ist innerhalb des Vorhalteraumes 6 nach oben gerichtet und muldenförmig ausgebildet. Die zweite Seite 60 ist innerhalb des Vorhalteraumes 6 nach unten gerichtet. Beide Seiten 58, 60 sind dabei muldenförmig ausgebildet. Die beidseitige muldenförmige Ausbildung der Förderelemente 18, 28 führt dazu, das beim Übergang des Trägerelementes 16 vom Aufwärtstrum in den Abwärtstrum die getragenen Legegutbestandteile 20 in die Umlaufrichtung 12 von den Förderelementen 18, 28, die sie im Vorhalteraum 6 aufgenommen haben, auf die in die Umlaufrichtung 12 vorausgehenden Förderelemente 18, 28 schwerkraftbedingt übergeben werden können und die Legegutbestandteile 20 auch nach der Übergabe zuverlässig positioniert sind (vgl. insbesondere Fig. 13).

Es ist anzumerken, dass die Ausführungsbeispiele gemäß den Fig. 10, 12, 15 und 18 sich von den Ausführungsbeispiele gemäß den jeweils folgenden Fig. 11, 14, 16, 19 unterscheiden. Bei der erstgenannten Gruppe findet eine Bewegung der Förderelemente 18, 28 relativ zum Trägerelement 16 lediglich im Bereich des nichtdargestellten Abwärtstrums statt. Bei der zweiten Gruppe findet nur die Bewegung der Förderelemente 18, 28 von der ersten in die zweite Position im Bereich der hier dargestellten Abwärtstrums statt.

## Patentansprüche

1. Vorrichtung (2) zum Vereinzeln von Legegut, umfassend einen einen Vorhalteraum (6) ausbildenden Bunker (8) und zumindest eine zum Ablegen einer Reihe des Legegutes ausgebildete Fördervorrichtung (10), die zumindest ein im Betrieb in eine Umlaufrichtung (12) und um eine Umlenkachse (14) umlaufendes Trägerelement (16) und mehrere an dem Trägerelement (16) angeordnete Förderelemente (18) umfasst, die im Betrieb zur Aufnahme eines Legegutbestandteils (20) relativ zum Trägerelement (16) jeweils in einer ersten Position durch den Vorhalteraum (6) und zur Abgabe des Legegutbestandteils (20) durch einen Ausgabebereich (22) verlaufen,
wobei zumindest ein erstes der Förderelemente (18), insbesondere zumindest die Hälfte der Förderelemente (18), relativ zum Trägerelement (16) von der ersten Position zumindest anteilig parallel zur Umlenkachse (14) in eine zweite Position beweglich gelagert ist,
**dadurch gekennzeichnet, dass** dem ersten Förderelement (18) eine Bewegungseinrichtung zugeordnet ist, die zumindest ein ortsfest am Trägerelement (16) angeordnetes und zumindest mittelbar mit dem ersten Förderelement (18) gekoppeltes Fixierungselement (38) umfasst.

2. Vorrichtung nach Anspruch 1, **dadurch gekennzeichnet, dass** das erste Förderelement (18) in der ersten Position einerseits einer Trägerelementlängsebene (24) und zumindest ein zweites der Förderelemente (28) in der ersten Position andererseits der Trägerelementlängsebene (24) angeordnet ist.

3. Vorrichtung nach Anspruch 2, **dadurch gekennzeichnet, dass** das erste Förderelement (18) und das zweite Förderelement (28) jeweils aus der ersten Position auf die Trägerelementlängsebene (24) zu in die zweite Position beweglich gelagert sind.

4. Vorrichtung nach Anspruch 2 oder 3, **dadurch gekennzeichnet, dass** das erste Förderelement (18) und das zweite Förderelement (28) in der zweiten Position in Umlaufrichtung (12) betrachtet zumindest teilweise hintereinander angeordnet sind, wobei insbesondere die Trägerelementlängsebene (24) das erste und das zweite Förderelement (18, 28) in der zweiten Position jeweils bevorzugt mittig schneidet.

5. Vorrichtung nach Anspruch 3 oder 4, **dadurch gekennzeichnet, dass** das erste Förderelement (18) in der ersten und/oder zweiten Position bezogen auf die Umlaufrichtung (12) versetzt zu dem zweiten Förderelement (28) in der ersten und/oder zweiten Position angeordnet ist.

6. Vorrichtung nach einem der vorhergehenden Ansprüche, **dadurch gekennzeichnet, dass** die Fördervorrichtung (10) zu einer Überführung des ersten Förderelementes (18) von der ersten Position in die zweite Position während des Betriebes und entlang der Umlaufrichtung (12) zwischen dem Vorhalteraum (6) und dem Ausgabebereich (22) ausgebildet ist.

7. Vorrichtung nach einem der vorhergehenden Ansprüche, **gekennzeichnet durch** zumindest ein erstes zu einem Maschinenrahmen (26) im Betrieb insbesondere ortsfestes und zumindest eine Führungsfläche (30) aufweisendes Führungselement (32), das zumindest zu einer teilweisen Bewegung zumindest des ersten Förderelementes (18) von der ersten Position in die zweite Position und/oder zurück während des Umlaufens des Trägerelementes (16) ausgebildet ist.

8. Vorrichtung nach Anspruch 7, **dadurch gekennzeichnet, dass** ein Abstand oder eine Orientierung der Führungsfläche (30) zur Trägerelementlängsebene (24) und/oder zu einer zur Trägerelementlängsebene (24) rechtwinkligen und sich lokal parallel zur Umlaufrichtung (12) erstreckenden Trägerelementquerebene (34) in Umlaufrichtung (12) variiert.

9. Vorrichtung nach Anspruch 7 oder 8, **dadurch gekennzeichnet, dass** das zumindest eine Führungselement (32) derart positioniert ist, dass zumindest das erste Förderelement (18) im Betrieb zumindest anteilig abwärts an dem Führungselement (32) entlangbewegt wird.

10. Vorrichtung nach einem der vorhergehenden Ansprüche, **dadurch gekennzeichnet, dass** das erste Förderelement (18) derart gelagert ist, dass es in der ersten Position und in der zweiten Position einen zumindest im Wesentlichen übereinstimmenden Abstand von dem Trägerelement (16) hat und/oder bezogen auf die Umlaufrichtung (12) relativ zum Trägerelement (16) zumindest im Wesentlichen übereinstimmend positioniert ist.

11. Vorrichtung nach einem der vorhergehenden Ansprüche, **dadurch gekennzeichnet, dass** das erste Förderelement (18) zumindest anteilig um eine Förderelementschwenkachse (40) schwenkbar am Trägerelement (16) angeordnet ist.

12. Vorrichtung nach Anspruch 11, **dadurch gekennzeichnet, dass** die Förderelementschwenkachse (40) im Betrieb zumindest zeitweilig parallel zur Umlaufrichtung (12) angeordnet ist.

13. Vorrichtung nach Anspruch 12 unter Einschluss des Anspruchs 2, **dadurch gekennzeichnet, dass** in die Umlaufrichtung (12) betrachtet die Förderelementschwenkachse (40) des ersten Förderelementes (18) einerseits der Trägerelementlängsebene (24) und eine Förderelementschwenkachse (42) des zweiten Förderelementes (28) andererseits der Trägerelementlängsebene (24) angeordnet ist.

14. Vorrichtung nach Anspruch 12 oder 13, **gekennzeichnet durch** ein ortsfest am ersten Förderelement (18) angeordnetes Halteelement (44), das das erste Förderelement (18) bezogen auf die Förderelementschwenkachse (40) in eine radiale Richtung, bevorzugt zumindest um eine der Hälfte einer Erstreckung des ersten Förderelementes (18) in die radiale Richtung entsprechenden Distanz, besonders bevorzugt zumindest um eine der gesamten Erstreckung entsprechenden Distanz, von der Förderelementschwenkachse (40) beabstandet.

15. Vorrichtung nach Anspruch 14 unter Einschluss des Anspruchs 2, **dadurch gekennzeichnet, dass** an dem ersten Förderelement (18) ein erstes Halteelement (44) angeordnet ist und an dem zweiten Förderelement (28) ein zweites Halteelement (46) angeordnet ist, wobei das erste und das zweite Halteelement (44, 46) voneinander abweichend, insbesondere spiegelsymmetrisch bezogen auf die Trägerelementlängsebene (24), ausgebildet sind.

16. Vorrichtung nach Anspruch 11, **dadurch gekennzeichnet, dass** die Förderelementschwenkachse (40) angewinkelt, bevorzugt rechtwinklig, zur Umlaufrichtung (12) und parallel zur Trägerelementlängsebene (24) angeordnet ist, wobei das erste Förderelement (18) insbesondere zwei zueinander um die Förderelementschwenkachse (40) angewinkelt angeordnete Ablagemulden (48) aufweist.

17. Vorrichtung nach einem der vorhergehenden Ansprüche, **dadurch gekennzeichnet, dass** das erste Förderelement (18) zumindest anteilig in eine zur Trägerelementlängsebene (24) rechtwinklige Schubrichtung (50) verschieblich am Trägerelement (16) angeordnet ist.

18. Vorrichtung nach einem der vorhergehenden Ansprüche, **dadurch gekennzeichnet, dass** das erste Förderelement (18) mittels eines insbesondere eine Parallelführung ausbildenden Koppelgetriebes (52) am Trägerelement (16) angeordnet ist, wobei Koppelschwenkachsen (54) des Koppelgetriebes (52) insbesondere im Betrieb zumindest zeitweilig parallel zur Umlaufrichtung (12) angeordnet sind.

19. Vorrichtung nach einem der vorhergehenden Ansprüche unter Einschluss von Anspruch 11, **dadurch gekennzeichnet, dass** die Förderelementschwenkachse (40) angewinkelt, bevorzugt rechtwinklig, zur Trägerelementlängsebene (24) angeordnet ist.

20. Vorrichtung nach einem der vorstehenden Ansprüche unter Einschluss der Ansprüche 11 und 17, **dadurch gekennzeichnet, dass** das erste Förderelement (18) derart gelagert ist, dass es unabhängig voneinander verschieblich und schwenkbar ist.

21. Vorrichtung nach einem der vorhergehenden Ansprüche, **dadurch gekennzeichnet, dass** das erste Förderelement (18) mittels eines wenigstens abschnittsweise zumindest im Wesentlichen bogen- oder spiralsegmentförmigen Halteelementes (44) anteilig um eine zur Umlenkachse (14) parallele Schwenkachse verschwenkbar und anteilig in eine zur Trägerelementlängsebene (24) rechtwinklige Schubrichtung (50) verschieblich am Trägerelement (16) angeordnet ist.

22. Vorrichtung nach einem der vorhergehenden Ansprüche, **dadurch gekennzeichnet, dass** das erste Förderelement (18) derart am jeweiligen Trägerelement (16) angeordnet ist, dass das erste Förderelement (18) zumindest in der ersten Position oder in der zweiten Position aus einer Radialrichtung betrachtet, insbesondere zu einem überwiegenden Teil, quer zur Trägerelementlängsebene (24) über das Trägerelement (16) übersteht.

23. Vorrichtung nach einem der vorhergehenden Ansprüche, **dadurch gekennzeichnet, dass** das erste Förderelement (18) eine erste Seite (58) hat, die innerhalb zumindest eines Teils des Vorhalteraumes (6) nach oben gerichtet ist und muldenförmig ausgebildet ist, und eine zweite Seite (60) hat, die innerhalb zumindest des Teils des Vorhalteraumes (6) nach unten gerichtet ist und insbesondere zumindest im Wesentlichen spiegelsymmetrisch zur ersten Seite (58) muldenförmig ausgebildet ist.

24. Kartoffellegemaschine (62) mit einer Koppelvorrichtung zur Kopplung mit einer Zugmaschine und einer Vorrichtung (2) nach einem der vorhergehenden Ansprüche, die insbesondere eine Mehrzahl von Fördervorrichtungen (10) umfasst, denen jeweils zumindest ein Scharelement zur Erzeugung einer Furche zugeordnet ist, wobei der Ausgabebereich (22) bezogen auf eine Fahrtrichtung (66) hinter dem Scharelement angeordnet ist.

## Claims

1. Device (2) for singularizing planting material, comprising a hopper (8) which is designed as a holding chamber (6), and at least one conveying device (10) which is designed to deposit a row of the planting material and comprises at least one carrier element (16) which during operation revolves in a revolving direction (12) and about a deflection axis (14), and a plurality of conveying elements (18) which are disposed on the carrier element (16) and during operation, for receiving a planting material constituent part (20), run in each case relative to the carrier element (16) in a first position through the holding chamber (6) and, for dispensing the planting material constituent part (20), through a delivery region (22),
wherein at least a first one of the conveying elements (18), in particular at least half of the conveying elements (18), is/are mounted so as to be movable relative to the carrier element (16) from the first position to a second position at least proportionally parallel to the deflection axis (14), **characterized in that** the first conveying element (18) is assigned a motion apparatus which comprises at least one fixing element (38) that is disposed so as to be stationary on the carrier element (16) and is at least indirectly coupled to the first conveying element (18).

2. Device according to Claim 1, **characterized in that** the first conveying element (18) in the first position is disposed on one side of a carrier element longitudinal plane (24), and at least a second one of the conveying elements (28) in the first position is disposed on the other side of the carrier element longitudinal plane (24).

3. Device according to Claim 2, **characterized in that** the first conveying element (18) and the second conveying element (28) are in each case mounted so as to be movable from the first position, towards the carrier element longitudinal plane (24), to the second position.

4. Device according to Claim 2 or 3, **characterized in that** the first conveying element (18) and the second conveying element (28), when viewed in the revolving direction (12), in the second position are at least in part disposed behind one another, wherein in particular the carrier element longitudinal plane (24) intersects in each case the first and the second conveying element (18, 28) preferably centrically in the second position.

5. Device according to Claim 3 or 4, **characterized in that** in terms of the revolving direction (12), the first conveying element (18) in the first and/or the second position is disposed so as to be offset from the second conveying element (28) in the first and/or the second position.

6. Device according to one of the preceding claims, **characterized in that** the conveying device (10) is designed to transfer the first conveying element (18) from the first position to the second position during operation and along the revolving direction (12) between the holding chamber (6) and the delivery region (22).

7. Device according to one of the preceding claims, **characterized by** at least one first guiding element (32) which during operation is in particular stationary in relation to a machine frame (26) and has at least one guide face (30) and is designed to at least partially move at least the first conveying element (18) from the first position to the second position and/or back while the carrier element (16) revolves.

8. Device according to Claim 7, **characterized in that** a spacing or an orientation of the guide face (30) in relation to the carrier element longitudinal plane (24), and/or in relation to the carrier element transverse plane (34) which is orthogonal to the carrier element longitudinal plane (24) and locally extends parallel to the revolving direction (12), varies in the revolving direction (12).

9. Device according to Claim 7 or 8, **characterized in that** the at least one guiding element (32) is positioned in such a manner that at least the first conveying element (18) is at least proportionally moved downwards along the guiding element (32) during operation.

10. Device according to one of the preceding claims, **characterized in that** the first conveying element (18) is mounted in such a manner that said first conveying element (18) in the first position and in the second position has an at least substantially matching spacing from the carrier element (16) and/or in terms of the revolving direction (12) is positioned in an at least substantially matching manner relative to the carrier element (16).

11. Device according to one of the preceding claims, **characterized in that** the first conveying element (18) is disposed on the carrier element (16) so as to be at least proportionally pivotable about a conveying element pivot axis (40).

12. Device according to Claim 11, **characterized in that** the conveying element pivot axis (40) is at least sporadically disposed so as to be parallel to the revolving direction (12) during operation.

13. Device according to Claim 12 while including Claim 2, **characterized in that**, when viewed in the revolving direction (12), the conveying element pivot axis (40) of the first conveying element (18) is disposed on one side of the carrier element longitudinal plane (24), and a conveying element pivot axis (42) of the second conveying element (28) is disposed on the other side of the carrier element longitudinal plane (24).

14. Device according to Claim 12 or 13, **characterized by** a holding element (44) which is disposed so as to be stationary on the first conveying element (18) and in terms of the conveying element pivot axis (40) spaces the first conveying element (18) apart from the conveying element pivot axis (40) in a radial direction, preferably by at least a distance corresponding to half an extent of the first conveying element (18) in the radial direction, particularly preferably by at least a distance corresponding to the entire extent.

15. Device according to Claim 14 while including Claim 2, **characterized in that** a first holding element (44) is disposed on the first conveying element (18), and a second holding element (46) is disposed on the second conveying element (28), wherein the first and the second holding element (44, 46) are designed to differ from one another, in particular to be mirror-symmetrical in terms of the carrier element longitudinal plane (24).

16. Device according to Claim 11, **characterized in that** the conveying element pivot axis (40) is disposed so as to be at an angle, preferably orthogonal, to the revolving direction (12) and parallel to the carrier element longitudinal plane (24), wherein the first conveying element (18) has in particular two depositing troughs (48) which are disposed about the conveying element pivot axis (40) so as to be at an angle in relation to one another.

17. Device according to one of the preceding claims, **characterized in that** the first conveying element (18) is disposed on the carrier element (16) so as to be at least proportionally displaceable in a thrust direction (50) orthogonal to the carrier element longitudinal plane (24).

18. Device according to one of the preceding claims, **characterized in that** the first conveying element (18) is disposed on the carrier element (16) by means of a linkage (52) which is in particular designed as a parallel guide, wherein linkage pivot axes (54) of the linkage (52), in particular during operation, are at least sporadically disposed so as to be parallel to the revolving direction (12).

19. Device according to one of the preceding claims while including Claim 11, **characterized in that** the conveying element pivot axis (40) is disposed at an angle, in particular orthogonally, to the carrier element longitudinal plane (24).

20. Device according to one of the preceding claims while including Claims 11 and 17, **characterized in that** the first conveying element (18) is mounted in such a manner that said first conveying element (18) is independently displaceable and pivotable.

21. Device according to one of the preceding claims, **characterized in that** the first conveying element (18), by means of a holding element (44) which is at least in portions at least substantially arcuate or spiral-segment-shaped, is disposed on the carrier element (16) so as to be proportionally pivotable about a pivot axis parallel to the deflection axis (14) and proportionally displaceable in a thrust direction (50) orthogonal to the carrier element longitudinal plane (24).

22. Device according to one of the preceding claims, **characterized in that** the first conveying element (18) is disposed on the respective carrier element (16) in such a manner that the first conveying element (18) at least in the first position or in the second position, when viewed from a radial direction, projects, in particular largely, transversely to the carrier element longitudinal plane (24) beyond the carrier element (16).

23. Device according to one of the preceding claims, **characterized in that** the first conveying element (18) has a first side (58) which within at least part of the holding chamber (6) is directed upwards and designed to be trough-shaped, and has a second side (60) which at least within that part of the holding chamber (6) is directed downwards and is in particular at least substantially designed in a trough-shaped manner so as to be mirror-symmetrical to the first side (58).

24. Potato planting machine (62) having a coupling device for coupling to a towing machine and a device (2) according to one of the preceding claims, which device (2) in particular comprises a plurality of conveying devices (10), each of which being assigned at least one ploughshare element for generating a furrow, wherein the delivery region (22) is disposed behind the ploughshare element in terms of a direction of travel (66).

## Revendications

1. Dispositif (2) de séparation de produit à planter, comprenant une trémie (8) formant un espace de stockage (6) et au moins un dispositif de transport (10) réalisé pour déposer une rangée du produit à planter, lequel dispositif de transport comprend au moins un élément porteur (16) tournant dans un sens de rotation (12) et autour d'un axe de déviation (14) lors du fonctionnement et plusieurs éléments de transport (18) disposés sur l'élément porteur (16), lesquels s'étendent, lors du fonctionnement, à travers l'espace de stockage (6) pour la réception d'une partie du produit à planter (20) par rapport à l'élément porteur (16) respectivement dans une première position et à travers une région de distribution (22) pour la distribution de la partie de produit à planter (20),
dans lequel au moins un premier élément des éléments de transport (18), en particulier au moins la moitié des éléments de transport (18), est montée mobile par rapport à l'élément porteur (16) de la première position à une deuxième position au moins partiellement parallèlement à l'axe de déviation (14),
**caractérisé en ce qu'**un dispositif de mouvement est associé au premier élément de transport (18), lequel dispositif de mouvement comprend au moins un élément de fixation (38) disposé de manière fixe sur l'élément porteur (16) et accouplé au moins indirectement au premier élément de transport (18).

2. Dispositif selon la revendication 1, **caractérisé en ce que** le premier élément de transport (18) est disposé dans la première position d'un côté d'un plan longitudinal d'élément porteur (24) et au moins un deuxième élément des éléments de transport (28) est disposé dans la première position de l'autre côté du plan longitudinal d'élément porteur (24).

3. Dispositif selon la revendication 2, **caractérisé en ce que** le premier élément de transport (18) et le deuxième élément de transport (28) sont montés mobiles respectivement de la première position, vers le plan longitudinal d'élément porteur (24), à la deuxième position.

4. Dispositif selon la revendication 2 ou 3, **caractérisé en ce que** le premier élément de transport (18) et le deuxième élément de transport (28) sont disposés au moins partiellement l'un derrière l'autre dans la deuxième position, considérés dans le sens de rotation (12), en particulier le plan longitudinal d'élément porteur (24) croisant respectivement de préférence centralement le premier et le deuxième élément de transport (18, 28) dans la deuxième position.

5. Dispositif selon la revendication 3 ou 4, **caractérisé en ce que** le premier élément de transport (18) dans la première et/ou la deuxième position est disposé de manière décalée par rapport au sens de rotation (12) par rapport au deuxième élément de transport (28) dans la première et/ou la deuxième position.

6. Dispositif selon l'une des revendications précédentes, **caractérisé en ce que** le dispositif de transport (10) est réalisé pour un transfert du premier élément de transport (18) de la première position à la deuxième position pendant le fonctionnement et le long du sens de rotation (12) entre l'espace de stockage (6) et la région de distribution (22).

7. Dispositif selon l'une des revendications précédentes, **caractérisé par** au moins un premier élément de guidage (32) en particulier fixe par rapport à un bâti de machine (26) lors du fonctionnement et présentant au moins une surface de guidage (30), lequel élément de guidage est réalisé au moins pour un mouvement partiel au moins du premier élément de transport (18) de la première position à la deuxième position et/ou inversement pendant la rotation de l'élément porteur (16) .

8. Dispositif selon la revendication 7, **caractérisé en ce qu'**une distance ou une orientation de la surface de guidage (30) par rapport au plan longitudinal d'élément porteur (24) et/ou par rapport à un plan transversal d'élément porteur (34) perpendiculaire au plan longitudinal d'élément porteur (24) et s'étendant localement parallèlement au sens de rotation (12) varie dans le sens de rotation (12).

9. Dispositif selon la revendication 7 ou 8, **caractérisé en ce que** l'au moins un élément de guidage (32) est positionné de telle sorte qu'au moins le premier élément de transport (18) est déplacé au moins partiellement vers le bas le long de l'élément de guidage (32) lors du fonctionnement.

10. Dispositif selon l'une des revendications précédentes, **caractérisé en ce que** le premier élément de transport (18) est monté de telle sorte qu'il a une distance à l'élément porteur (16) au moins sensiblement coïncidente dans la première position et dans la deuxième position et/ou est positionné au moins sensiblement de manière coïncidente par rapport à l'élément porteur (16) par rapport au sens de rotation (12).

11. Dispositif selon l'une des revendications précédentes, **caractérisé en ce que** le premier élément de transport (18) est disposé sur l'élément porteur (16) de manière au moins partiellement pivotante autour d'un axe de pivotement d'élément de transport (40).

12. Dispositif selon la revendication 11, **caractérisé en ce que** l'axe de pivotement d'élément de transport (40) est disposé de manière au moins temporairement parallèle au sens de rotation (12) lors du fonctionnement.

13. Dispositif selon la revendication 12, y compris la revendication 2, **caractérisé en ce que**, considéré dans le sens de rotation (12), l'axe de pivotement d'élément de transport (40) du premier élément de transport (18) est disposé d'un côté du plan longitudinal d'élément porteur (24) et un axe de pivotement d'élément de transport (42) du deuxième élément de transport (28) est disposé de l'autre côté du plan longitudinal d'élément porteur (24).

14. Dispositif selon la revendication 12 ou 13, **caractérisé par** un élément de retenue (44) disposé de manière fixe sur le premier élément de transport (18), lequel élément de retenue espace le premier élément de transport (18) de l'axe de pivotement d'élément de transport (40) dans une direction radiale par rapport à l'axe de pivotement d'élément de transport (40), de préférence au moins d'une distance correspondant à la moitié d'une étendue du premier élément de transport (18) dans la direction radiale, de manière particulièrement préférée au moins d'une distance correspondant à toute l'étendue.

15. Dispositif selon la revendication 14, y compris la revendication 2, **caractérisé en ce qu'**un premier élément de retenue (44) est disposé sur le premier élément de transport (18) et un deuxième élément de retenue (46) est disposé sur le deuxième élément de transport (28), le premier et le deuxième élément de retenue (44, 46) étant réalisés différemment de l'autre, en particulier en symétrie miroir par rapport au plan longitudinal d'élément porteur (24).

16. Dispositif selon la revendication 11, **caractérisé en ce que** l'axe de pivotement d'élément porteur (40) est réalisé de manière inclinée, de préférence de manière perpendiculaire, par rapport au sens de rotation (12) et parallèlement au plan longitudinal d'élément porteur (24), le premier élément de transport (18) présentant en particulier deux auges de distribution (48) disposées de manière inclinée l'une par rapport à l'autre autour de l'axe de pivotement d'élément de transport (40).

17. Dispositif selon l'une des revendications précédentes, **caractérisé en ce que** le premier élément de transport (18) est disposé sur l'élément porteur (16) de manière mobile au moins partiellement dans une direction de poussée (50) perpendiculaire au plan longitudinal d'élément porteur (24).

18. Dispositif selon l'une des revendications précédentes, **caractérisé en ce que** le premier élément de transport (18) est disposé sur l'élément porteur (16) au moyen d'une transmission d'accouplement (52) formant en particulier un guide parallèle, des axes de pivotement d'accouplement (54) de la transmission d'accouplement (52) étant disposés au moins temporairement parallèlement au sens de rotation (12) en particulier lors du fonctionnement.

19. Dispositif selon l'une des revendications précédentes, y compris la revendication 11, **caractérisé en ce que** l'axe de pivotement d'élément de transport (40) est disposé de manière inclinée, en particulier de manière perpendiculaire, au plan longitudinal d'élément porteur (24).

20. Dispositif selon l'une des revendications précédentes, y compris les revendications 11 et 17, **caractérisé en ce que** le premier élément de transport (18) est monté de telle sorte qu'il est mobile et pivotant indépendamment.

21. Dispositif selon l'une des revendications précédentes, **caractérisé en ce que** le premier élément de transport (18) est disposé sur l'élément porteur (16), au moyen d'un élément de retenue (44) au moins dans certaines parties sensiblement en forme d'arc ou en forme de segment en spirale, en partie de manière pivotante autour d'un axe de pivotement parallèle à l'axe de déviation (14) et en partie de manière mobile dans une direction de poussée (50) perpendiculaires au plan longitudinal d'élément porteur (24).

22. Dispositif selon l'une des revendications précédentes, **caractérisé en ce que** le premier élément de transport (18) est disposé sur l'élément porteur (16) respectif de telle sorte que le premier élément de transport (18), au moins dans la première position ou dans la deuxième position, considéré à partir d'une direction radiale, fait saillie transversalement au plan longitudinal d'élément porteur (24) au-delà de l'élément porteur (16) en particulier dans une large mesure.

23. Dispositif selon l'une des revendications précédentes, **caractérisé en ce que** le premier élément de transport (18) a un premier côté (58) qui est orienté vers le haut à l'intérieur d'au moins une partie de l'espace de stockage (6) et est réalisé en forme d'auge, et a un deuxième côté (60) qui est orienté vers le bas à l'intérieur d'au moins la partie de l'espace de stockage (6) et est réalisé en forme d'auge en particulier au moins sensiblement en symétrie miroir par rapport au premier côté (58).

24. Planteuse de pommes de terre (62) comportant un dispositif d'accouplement servant à l'accouplement à un véhicule tracteur et un dispositif (2) selon l'une des revendications précédentes, qui comprend en particulier une pluralité de dispositifs de transport (10) auxquels est associé respectivement au moins un élément soc permettant de produire un sillon, la région de distribution (22) étant disposée derrière l'élément soc par rapport à une direction de conduite (66).
